# EUROPEAN PATENT APPLICATION

(11) **EP 4 406 636 A2**
(43) Date of publication of application: **31.07.2024**
(21) Application number: 24178031.1
(22) Date of filing: 15.01.2021
(51) Int. Cl.: B01D 35/16

(54) **FILTER CLEANING DEVICE, FILTER SYSTEM, AND FILTER CLEANING METHOD**

(30) Priority: 12.02.2020 JP 2020021228
(62) Divisional of application: 21752910.6
(71) Applicant: Sony Group Corporation, Tokyo 108-0075 (JP)
(72) Inventor: TABATA, Seiichiro, Tokyo 108-0075 (JP); BEARD, Tim, London SE19 3HF (GB); VAN DEN BERG, Jan Jasper, 1015 Lausanne (CH)
(74) Representative: D Young & Co LLP

(57) **Abstract**

Provided is a filter cleaning device capable of cleaning a filter while suppressing the shortening of the life of the filter.

The present technology provides a filter cleaning device that determines a contaminated region from a plurality of regions of a filter that captures particles or molecules, and supplies energy for reducing a contamination level to some of the plurality of regions determined as the contaminated region. According to the present technology, it is possible to provide a filter cleaning device capable of cleaning a filter while suppressing the shortening of the life of the filter.

## Description

### [Technical Field]

The technology according to the present disclosure (hereinafter, also referred to as "the present technology") relates to a filter cleaning device, a filter system, and a filter cleaning method.

### [Background Art]

Conventionally, for example, a technology for regenerating (cleaning) a filter that purifies air is known.

In the conventional air purifier, the filter is heated to regenerate the filter (see, for example, PTL 1).

### [Citation List]

### [Patent Literature]

[PTL 1]
JP 2017-036887 A

### [Summary]

### [Technical Problem]

However, in the conventional air purifier, since the entire area of the filter is uniformly heated, there is a problem that the life of the filter is shortened.

Therefore, an object of the present technology is to provide a filter cleaning device, a filter system, and a filter cleaning method capable of cleaning the filter while suppressing the shortening of the life of the filter.

### [Solution to Problem]

The present technology provides a filter cleaning device that determines a contaminated region from a plurality of regions of a filter that captures particles or molecules, and supplies energy for reducing a contamination level to some of the plurality of regions determined as the contaminated region.

In the filter cleaning device, a region having a contamination level equal to or higher than a threshold value among the plurality of regions may be determined as the contaminated region.

In the filter cleaning device, the energy may be supplied so that the contamination level becomes 0.

The filter cleaning device may include: a mesh electrode group having at least one mesh electrode pair composed of a pair of mesh electrodes disposed so as to sandwich at least two of the plurality of regions inside the filter; an energization unit capable of selectively applying a voltage between facing electrode regions of the pair of mesh electrodes; a measuring unit that measures a current flowing in each of the plurality of regions of the filter or an electrical resistance of the region when the energization unit performs first energization of applying a voltage between all the electrode regions of the mesh electrode pair; and a determining unit that determines the contaminated region from the plurality of regions of the filter based on measurement results from the measuring unit, wherein the energization unit may perform second energization of applying a voltage between the electrode regions corresponding to the region determined as the contaminated region by the determining unit among all the electrode regions of the mesh electrode pair.

In the filter cleaning device, the voltage applied between the electrode regions corresponding to the contaminated region during the second energization may be larger and an application time of the voltage may not be shorter than those during the first energization.

In the filter cleaning device, the voltage applied between the electrode regions corresponding to the contaminated region during the second energization may not be smaller and an application time of the voltage may be longer than those during the first energization.

The filter cleaning device may include: a branched end-face-emitting optical fiber provided in the filter so that at least an end face of a branch is disposed in each of the plurality of regions; and a light emission control unit capable of individually controlling light emission of a plurality of the end-face-emitting optical fibers, wherein the light emission control unit causes an end-face-emitting optical fiber corresponding to the contaminated region among the plurality of end-face-emitting optical fibers to emit light.

The filter cleaning device may include: a mesh electrode group having at least one mesh electrode pair composed of a pair of mesh electrodes disposed so as to sandwich at least two of the plurality of regions inside the filter; an energization unit capable of selectively applying a voltage between facing electrode regions of the pair of mesh electrodes; a measuring unit that measures a current flowing in each of the plurality of regions of the filter or an electrical resistance of the region when the energization unit performs first energization of applying a voltage between all the electrode regions of the mesh electrode pair; a determining unit that determines the contaminated region from the plurality of regions of the filter based on measurement results from the measuring unit; a branched end-face-emitting optical fiber provided in the filter so that at least an end face of a branch is disposed in each of the plurality of regions; and a light emission control unit capable of individually controlling light emission of a plurality of the end-face-emitting optical fibers, wherein the light emission control unit causes an end-face-emitting optical fiber corresponding to the contaminated region among the plurality of end-face-emitting optical fibers to emit light.

The filter cleaning device may include: an air blower that blows air into the filter; a measuring unit that measures an amount of air that has passed through at least one of the plurality of regions; and a determining unit that determines the contaminated region from the plurality of regions based on measurement results from the measuring unit.

The filter cleaning device may include: an imaging unit that images the plurality of regions; and a determining unit that determines whether or not each of the plurality of regions is a contaminated region based on imaging results from the imaging unit.

The plurality of regions may be arranged one-dimensionally.

The plurality of regions may be arranged two-dimensionally.

The plurality of regions may be arranged three-dimensionally.

The present technology provides a filter cleaning device that can detect a contamination level of each of a plurality of regions of a filter that captures particles or molecules, and can supply energy individually to the plurality of regions of the filter, wherein the filter cleaning device adjusts the amount of energy supplied to each of the plurality of regions based on the detected contamination level of each of the plurality of regions. The present technology provides a filter system including: a filter that captures particles or molecules; and a cleaning device that cleans the filter, wherein the cleaning device determines a contaminated region from a plurality of regions of the filter, and supplies energy for reducing a contamination level to some of the plurality of regions determined as the contaminated region.

The present technology provides a filter system including: a filter that captures particles or molecules; and a cleaning device that cleans the filter, wherein the cleaning device can detect a contamination level of each of a plurality of regions of a filter that captures particles or molecules, and can supply energy individually to the plurality of regions of the filter, and the filter cleaning device adjusts the amount of energy supplied to each of the plurality of regions based on the detected contamination level of each of the plurality of regions.

The present technology provides a filter cleaning method including: determining a contaminated region from a plurality of regions of a filter that captures particles or molecules; and supplying energy for reducing a contamination level to some of the plurality of regions determined as the contaminated region.

The determining may involve determining a region having a contamination level equal to or higher than a threshold value among the plurality of regions as the contaminated region.

The supplying may involve supplying the energy such that the contamination level becomes 0.

### [Brief Description of Drawings]

[Fig. 1]

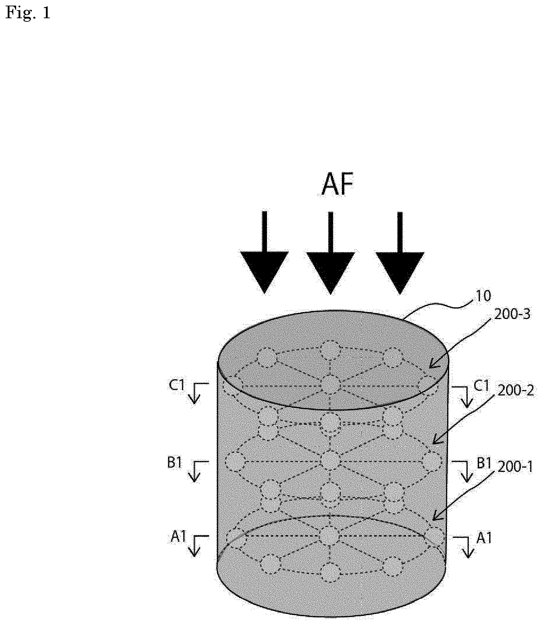

   Fig. 1 is a perspective view showing a partial configuration example including a filter of a filter system according to a first embodiment of the present technology.
[Fig. 2]

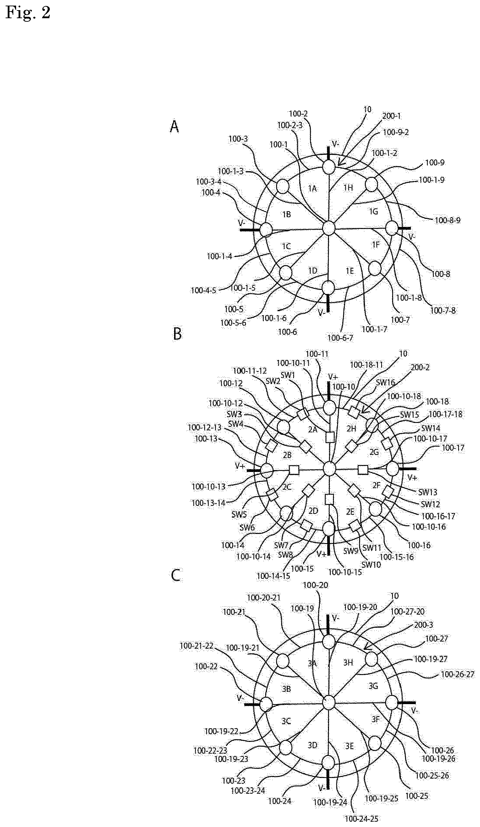

   Fig. 2A is a cross-sectional view taken along line A1-A1 of Fig. 1. Fig. 2B is a cross-sectional view taken along line B1-B1 of Fig. 1. Fig. 2C is a cross-sectional view taken along line C1-C1 of Fig. 1.
[Fig. 3]

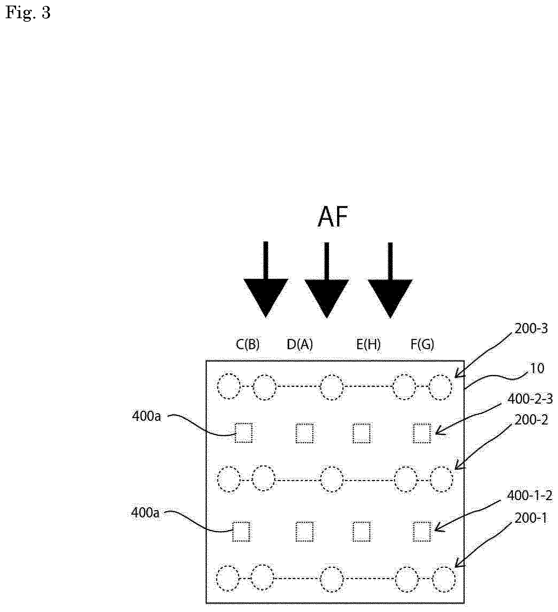

   Fig. 3 is a side view showing a partial configuration example including a filter of the filter system according to the first embodiment.
[Fig. 4]

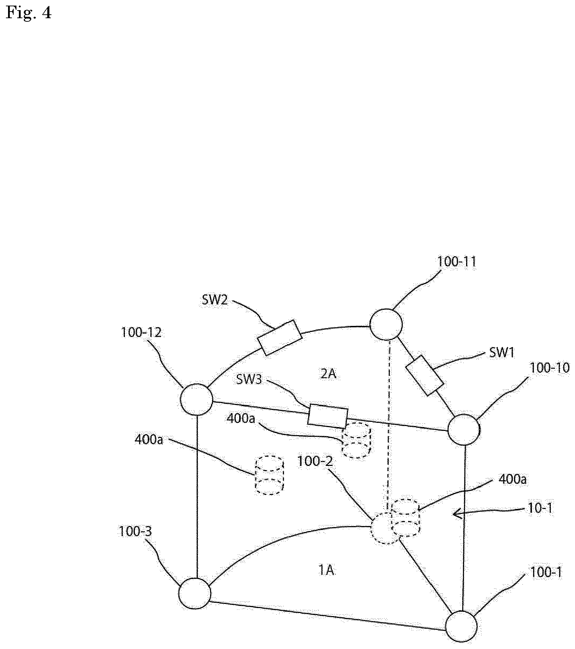

   Fig. 4 is a perspective view showing a region of a filter of the filter system according to the first embodiment.
[Fig. 5]

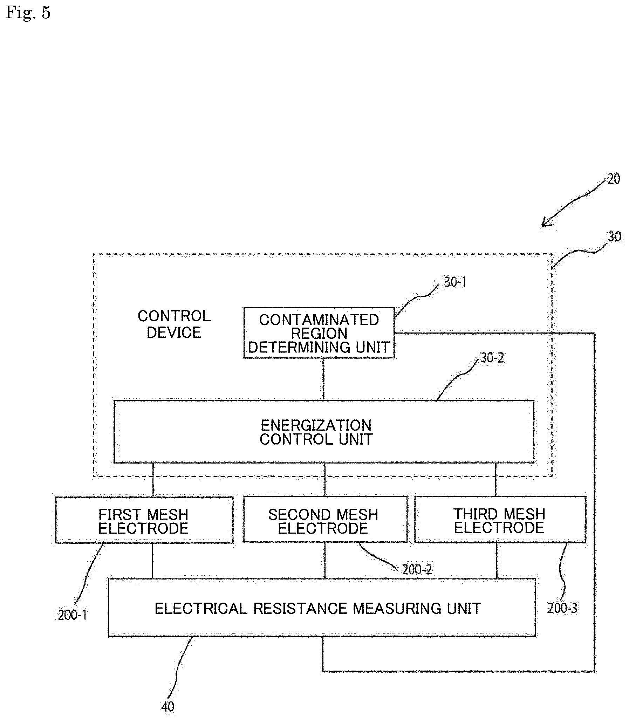

   Fig. 5 is a block diagram showing a function of the filter system according to the first embodiment.
[Fig. 6]

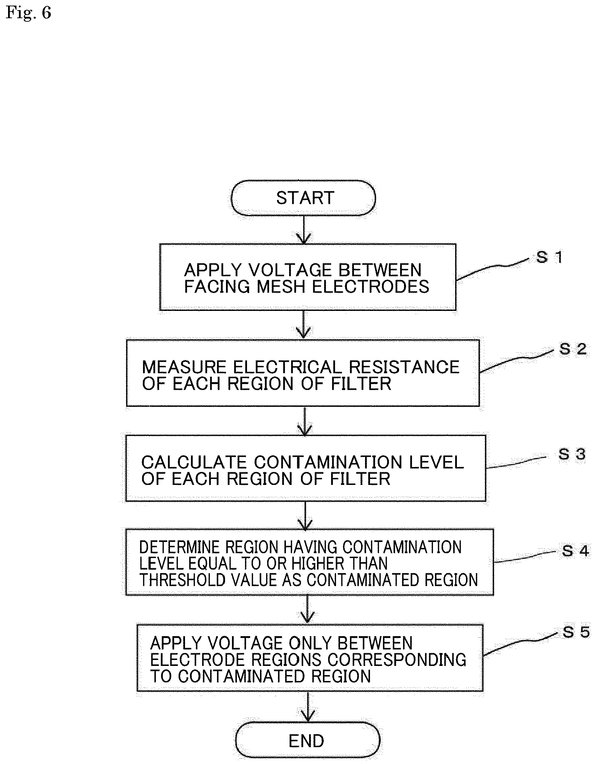

   Fig. 6 is a flowchart for explaining the control of the filter system according to the first embodiment.
[Fig. 7]

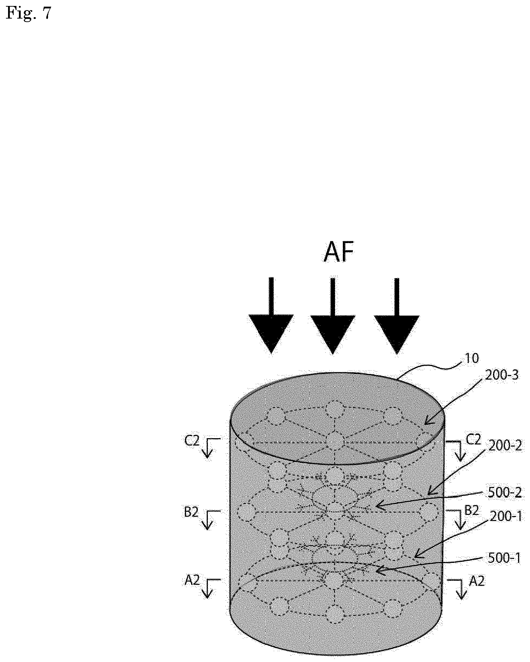

   Fig. 7 is a perspective view showing a partial configuration example including a filter of a filter system according to a second embodiment of the present technology.
[Fig. 8]

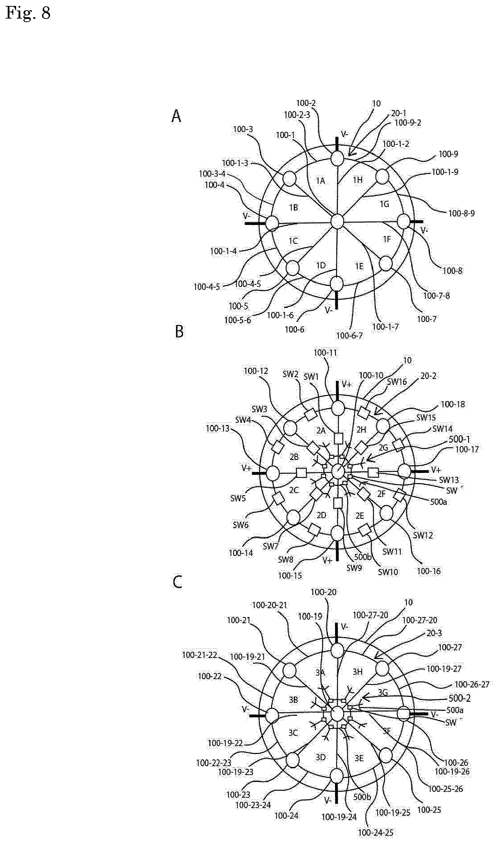

   Fig. 8A is a cross-sectional view taken along line A2-A2 of Fig. 7. Fig. 8B is a cross-sectional view taken along line B2-B2 of Fig. 7. Fig. 8C is a cross-sectional view taken along line C2-C2 of Fig. 7.
[Fig. 9]

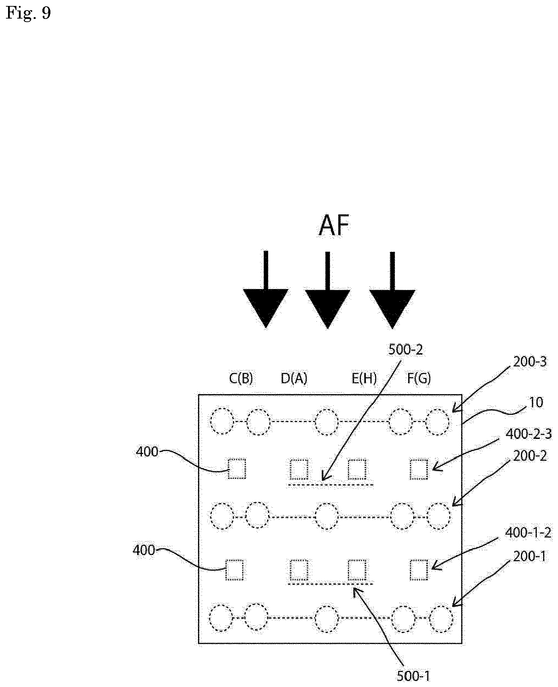

   Fig. 9 is a side view showing a partial configuration example including a filter of the filter system according to the second embodiment.
[Fig. 10]

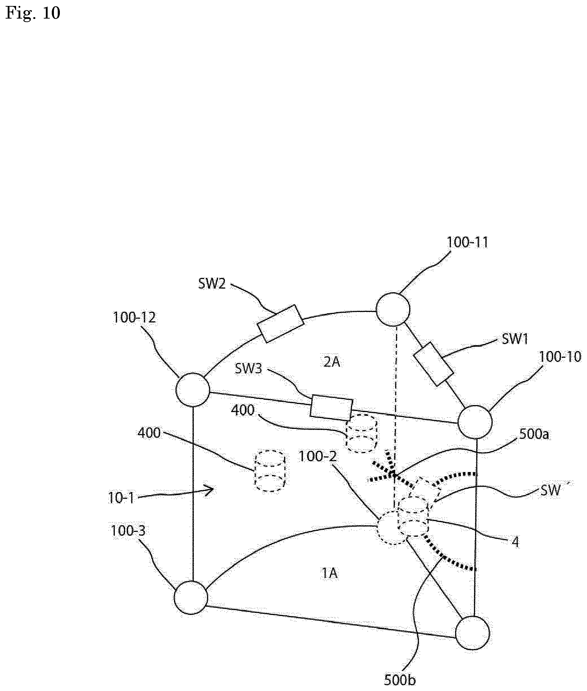

   Fig. 10 is a perspective view showing a region of a filter of the filter system according to the second embodiment.
[Fig. 11]

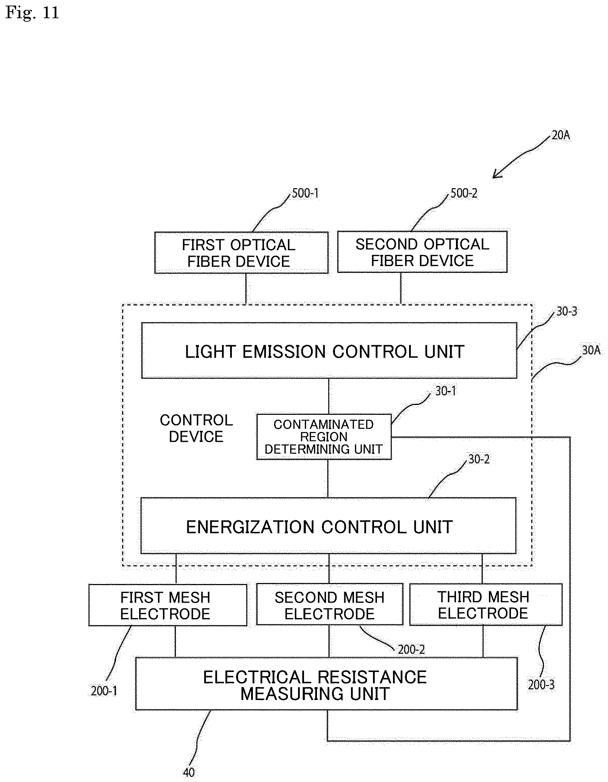

   Fig. 11 is a block diagram showing a function of the filter system according to the second embodiment.
[Fig. 12]

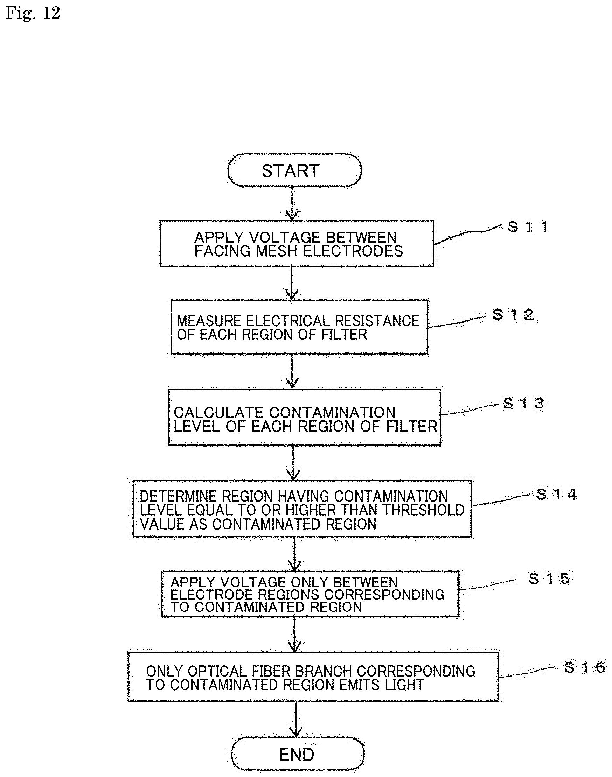

   Fig. 12 is a flowchart for explaining the control of the filter system according to the second embodiment.
[Fig. 13]

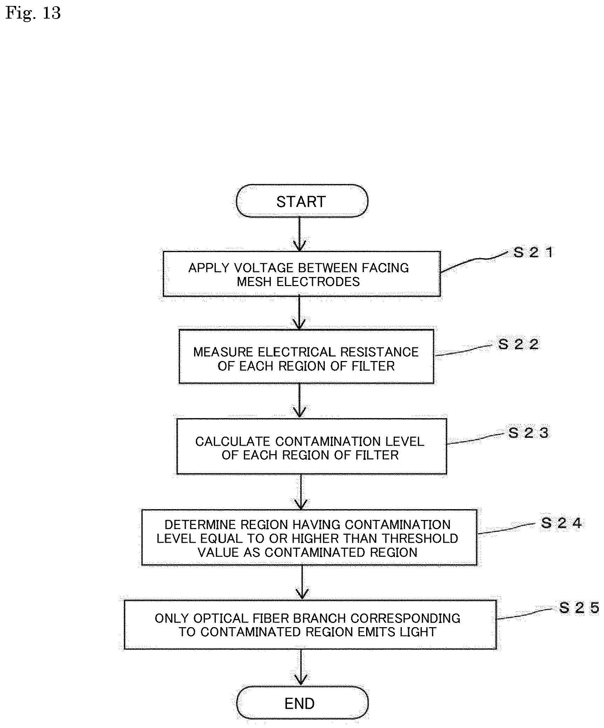

   Fig. 13 is a flowchart for explaining control of a filter system according to a third embodiment of the present technology.
[Fig. 14]

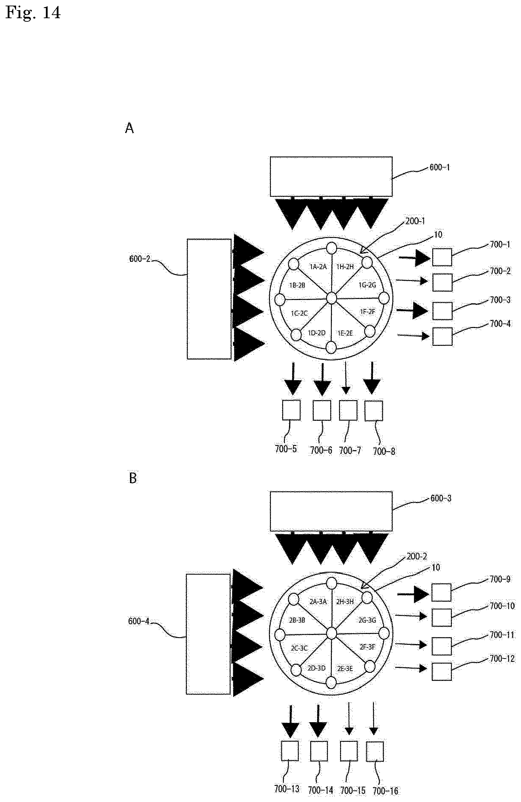

   Figs. 14A and 14B are cross-sectional views (first and second examples) showing a partial configuration example including a filter of a filter system according to a fourth embodiment of the present technology, respectively.
[Fig. 15]

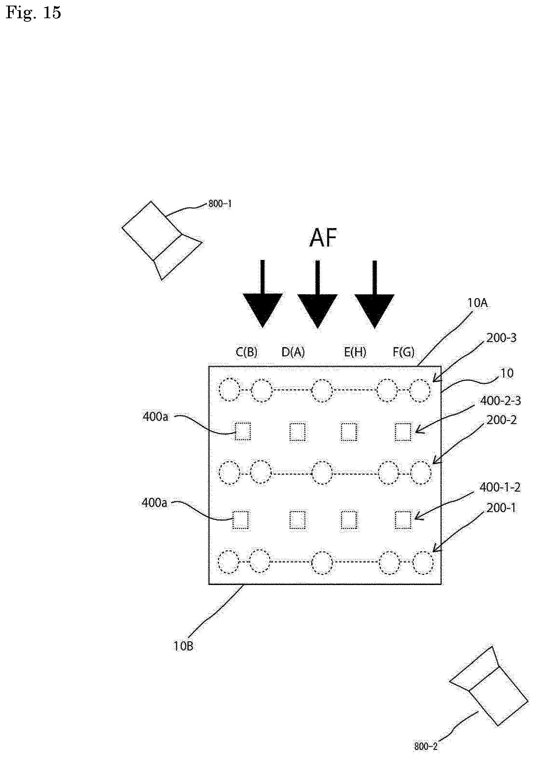

   Fig. 15 is a side view showing a partial configuration example including a filter of a filter system according to a fifth embodiment of the present technology.
[Fig. 16]

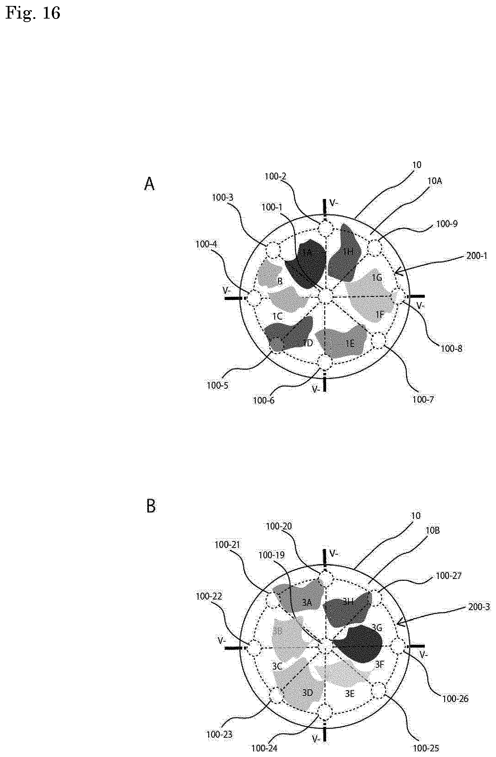

   Fig. 16 is a cross-sectional view (first and second examples) showing a partial configuration example including a filter of a filter system according to a sixth embodiment of the present technology.

### [Description of Embodiments]

Preferred embodiments of the present technology will be described in detail with reference to the accompanying figures below. Also, in the present specification and the figures, components having substantially the same functional configuration will be denoted by the same reference numerals, and thus repeated descriptions thereof will be omitted. The embodiments to be described below show a representative embodiment of the present technology, and the scope of the present technology should not be narrowly construed based on this. Even when it is described in the present specification that each of the filter cleaning device, the filter system, and the filter cleaning method according to the present technology has a plurality of effects, each of the filter cleaning device, the filter system, and the filter cleaning method according to the present technology may have at least one effect. The advantageous effects described in the present specification are merely exemplary and are not limited, and other advantageous effects may be obtained.

The description will be made in the following order.
1. Introduction
2. Filter system according to first embodiment of present technology
3. Filter system according to second embodiment of present technology
4. Filter system according to third embodiment of present technology
5. Filter system according to fourth embodiment of present technology
6. Filter system according to fifth embodiment of present technology
7. Modification example of present technology

### 1. <Introduction>

Conventionally, for example, a filter that purifies air is regenerated by heating and reused, but there is a problem that the life of the filter is shortened as the number of regenerations increases.

Therefore, after diligent studies, the inventors have succeeded in developing a technology capable of cleaning the filter while suppressing the shortening of the life of the filter, as described in detail below.

### 2. <Filter system according to first embodiment of present technology>

Hereinafter, the filter system according to the first embodiment of the present technology will be described with reference to the drawings. Fig. 1 is a perspective view of a filter system (excluding a control device) according to the first embodiment. Fig. 2A is a cross-sectional view taken along line A1-A1 of Fig. 1. Fig. 2B is a cross-sectional view taken along line B1-B1 of Fig. 1. Fig. 2C is a cross-sectional view taken along line C1-C1 of Fig. 1. Fig. 3 is a side view of the filter system according to the first embodiment. Fig. 4 is a perspective view showing one region of the filter system according to the first embodiment. Fig. 5 is a block diagram showing a function of the filter system (function of the cleaning device) according to the first embodiment.

The filter system according to the first embodiment is provided, for example, in an indoor air conditioner such as an air purifier, an air conditioner, a deodorizer, a dehumidifier, or a humidifier, a facility such as a clean room, a smoking room, a food factory, or a kitchen, a home appliance such as a refrigerator, a freezer, a vacuum cleaner, a blower, or a washing machine, and a mobile body such as a vehicle, an aircraft, and a ship.

As shown in Figs. 1 and 5, the filter system according to the first embodiment includes a filter 10 and a cleaning device 20 (filter cleaning device) for cleaning the filter 10.

The filter 10 is, for example, a filter that captures particles (for example, nanoparticles) or molecules (for example, organic molecules).

The filter 10 is used, for example, for purifying air.

As an example, the filter 10 is disposed on the flow path of the airflow AF in the indoor air conditioner, facility, home appliance, mobile body, and the like in which the filter system is provided.

As the filter 10, for example, a filter made of a porous carbon material such as a fibrous filter (for example, a HEPA filter or a ULPA filter), an activated carbon filter, a triporous (registered trademark) filter, or a filter made of a porous inorganic material made of various zeolites or porous silica is used.

As shown in Fig. 1, the filter 10 has a cylindrical shape as an example.

The inflow direction and the outflow direction of the airflow AF to the filter 10 substantially coincide with the axial direction of the filter 10 as an example.

The details of the filter 10 will be described later.

As shown in Figs. 1 and 5, the cleaning device 20 includes a plurality of (for example, three) mesh electrodes 200 (for example, first to third mesh electrodes 200-1, 200-2, and 200-3), a control device 30, and an electrical resistance measuring unit 40.

As shown in Figs. 1 to 3, the plurality of mesh electrodes 200 are disposed apart from each other inside the filter 10 so that the in-plane direction of each mesh electrode 200 is orthogonal to the axis of the filter 10. Specifically, as shown in Figs. 1 and 2, in the first to third mesh electrodes 200-1 to 200-3, the first mesh electrode 200-1 is located on the most downstream side of the flow path of the airflow AF, and the third mesh electrode 200-3 is located on the most upstream side of the flow path of the airflow AF.

As an example, each mesh electrode 200 has a circular mesh structure that covers substantially the entire area of the filter 10 in a plan view.

Each mesh electrode 200 is made of a conductive material such as, for example, a metal or an alloy.

### (First mesh electrode)

As an example, the first mesh electrode 200-1 has a circular mesh structure as a whole, including a plurality of (for example, eight) electrode regions 1A to 1H in a plan view, as shown in Fig. 2A.

The eight electrode regions 1A to 1H are regions in which the mesh structure is divided into eight parts (for example, eight equal parts) in the circumferential direction. That is, each electrode region has a substantially fan shape. The central angles of the fan shapes of the electrode regions are the same (for example, 45°) as an example. The central angles of the fan shapes of the electrode regions may be different from each other.

Each electrode region has three wires extending along the outer edge of the fan shape and a connection portion connecting the wires at each apex of the fan shape.

The eight electrode regions 1A to 1H share a connection portion 100-1 disposed at the center of the mesh structure.

The electrode regions adjacent to each other in the circumferential direction of the first mesh electrode 200-1 share a connection portion disposed at one end of the arc of the fan shape, and share one of the two wires forming the central angle of the fan shape.

The electrode region 1A has the connection portion 100-1, connection portions 100-2 and 100-3 disposed at both ends of the arc of the fan shape, a linear wire 100-1-2 having one end connected to the connection portion 100-1 and the other end connected to the connection portion 100-2, an arc-shaped wire 100-2-3 having one end connected to the connection portion 100-2 and the other end connected to the connection portion 100-3, and a linear wire 100-1-3 having one end connected to the connection portion 100-1 and the other end connected to the connection portion 100-3.

The electrode region 1B has the connection portion 100-1, connection portions 100-3 and 100-4 disposed at both ends of the arc of the fan shape, a linear wire 100-1-3 having one end connected to the connection portion 100-1 and the other end connected to the connection portion 100-3, an arc-shaped wire 100-2-3 having one end connected to the connection portion 100-2 and the other end connected to the connection portion 100-3, and a linear wire 100-1-4 having one end connected to the connection portion 100-1 and the other end connected to the connection portion 100-4.

The electrode region 1C has the connection portion 100-1, connection portions 100-4 and 100-5 disposed at both ends of the arc of the fan shape, a linear wire 100-1-4 having one end connected to the connection portion 100-1 and the other end connected to the connection portion 100-4, an arc-shaped wire 100-4-5 having one end connected to the connection portion 100-4 and the other end connected to the connection portion 100-5, and a linear wire 100-1-5 having one end connected to the connection portion 100-1 and the other end connected to the connection portion 100-5.

The electrode region 1D has the connection portion 100-1, connection portions 100-5 and 100-6 disposed at both ends of the arc of the fan shape, a linear wire 100-1-5 having one end connected to the connection portion 100-1 and the other end connected to the connection portion 100-5, an arc-shaped wire 100-5-6 having one end connected to the connection portion 100-5 and the other end connected to the connection portion 100-6, and a linear wire 100-1-6 having one end connected to the connection portion 100-1 and the other end connected to the connection portion 100-6.

The electrode region 1E has the connection portion 100-1, connection portions 100-6 and 100-7 disposed at both ends of the arc of the fan shape, a linear wire 100-1-6 having one end connected to the connection portion 100-1 and the other end connected to the connection portion 100-6, an arc-shaped wire 100-6-7 having one end connected to the connection portion 100-6 and the other end connected to the connection portion 100-7, and a linear wire 100-1-7 having one end connected to the connection portion 100-1 and the other end connected to the connection portion 100-7.

The electrode region 1F has the connection portion 100-1, connection portions 100-7 and 100-8 disposed at both ends of the arc of the fan shape, a linear wire 100-1-7 having one end connected to the connection portion 100-1 and the other end connected to the connection portion 100-7, an arc-shaped wire 100-7-8 having one end connected to the connection portion 100-7 and the other end connected to the connection portion 100-8, and a linear wire 100-1-8 having one end connected to the connection portion 100-1 and the other end connected to the connection portion 100-8.

The electrode region 1G has the connection portion 100-1, connection portions 100-8 and 100-9 disposed at both ends of the arc of the fan shape, a linear wire 100-1-8 having one end connected to the connection portion 100-1 and the other end connected to the connection portion 100-8, an arc-shaped wire 100-8-9 having one end connected to the connection portion 100-8 and the other end connected to the connection portion 100-9, and a linear wire 100-1-9 having one end connected to the connection portion 100-1 and the other end connected to the connection portion 100-9.

The electrode region 1H has the connection portion 100-1, connection portions 100-9 and 100-2 disposed at both ends of the arc of the fan shape, a linear wire 100-1-9 having one end connected to the connection portion 100-1 and the other end connected to the connection portion 100-9, an arc-shaped wire 100-9-2 having one end connected to the connection portion 100-9 and the other end connected to the connection portion 100-2, and a linear wire 100-1-2 having one end connected to the connection portion 100-1 and the other end connected to the connection portion 100-2.

### (Second mesh electrode)

As an example, the second mesh electrode 200-2 has a circular mesh structure as a whole, including a plurality of (for example, eight) electrode regions 2A to 2H in a plan view, as shown in Fig. 2B. In a plan view, the eight electrode regions 2A to 2H are in a positional relationship corresponding to the eight electrode regions 1A to 1H (see Fig. 2A), respectively.

The eight electrode regions 2A to 2H are regions in which the mesh structure is divided into eight parts (for example, eight equal parts) in the circumferential direction. That is, each electrode region has a substantially fan shape (for example, the same fan shape). The central angles of the fan shapes of the electrode regions are the same (for example, 45°) as an example. The central angles of the fan shape of each electrode region may be different from each other. Each electrode region has three wires extending along the outer edge of the fan shape and a connection portion connecting the wires at each apex of the fan shape.

The eight electrode regions 2A to 2H share a connection portion 100-10 disposed at the center of the mesh structure.

The electrode regions adjacent to each other in the circumferential direction of the second mesh electrode 200-2 share a connection portion disposed at one end of the arc of the fan shape, and share one of the two wires forming the central angle of the fan shape.

In each electrode region, a switch SW (for example, any of SW1 to SW16) is provided in the middle of each wire so that conduction and non-conduction between connection portions connected to both ends of the wire can be switched. The on/off control of the switch SW is performed by the control device 30.

The electrode region 2A has the connection portion 100-10, connection portions 100-11 and 100-12 disposed at both ends of the arc of the fan shape, a linear wire 100-10-11 connecting the connection portion 100-10 and the connection portion 100-11 via the switch SW1, an arc-shaped wire 100-11-12 connecting the connection portion 100-11 and the connection portion 100-12 via the switch SW2, and a linear wire 100-10-12 connecting the connection portion 100-10 and the connection portion 100-12 via the switch SW3.

The electrode region 2B has the connection portion 100-10, connection portions 100-12 and 100-13 disposed at both ends of the arc of the fan shape, a linear wire 100-10-12 connecting the connection portion 100-10 and the connection portion 100-12 via the switch SW3, an arc-shaped wire 100-12-13 connecting the connection portion 100-12 and the connection portion 100-13 via the switch SW4, and a linear wire 100-10-13 connecting the connection portion 100-10 and the connection portion 100-13 via the switch SW5.

The electrode region 2C has the connection portion 100-10, connection portions 100-13 and 100-14 disposed at both ends of the arc of the fan shape, a linear wire 100-10-13 connecting the connection portion 100-10 and the connection portion 100-13 via the switch SW5, an arc-shaped wire 100-13-14 connecting the connection portion 100-13 and the connection portion 100-14 via the switch SW6, and a linear wire 100-10-14 connecting the connection portion 100-10 and the connection portion 100-14 via the switch SW7.

The electrode region 2D has the connection portion 100-10, connection portions 100-14 and 100-15 disposed at both ends of the arc of the fan shape, a linear wire 100-10-14 connecting the connection portion 100-10 and the connection portion 100-14 via the switch SW7, an arc-shaped wire 100-14-15 connecting the connection portion 100-14 and the connection portion 100-15 via the switch SW8, and a linear wire 100-10-15 connecting the connection portion 100-10 and the connection portion 100-15 via the switch SW9.

The electrode region 2E has the connection portion 100-10, connection portions 100-15 and 100-16 disposed at both ends of the arc of the fan shape, a linear wire 100-10-15 connecting the connection portion 100-10 and the connection portion 100-15 via the switch SW9, an arc-shaped wire 100-15-16 connecting the connection portion 100-15 and the connection portion 100-16 via the switch SW10, and a linear wire 100-10-16 connecting the connection portion 100-10 and the connection portion 100-16 via the switch SW11.

The electrode region 2F has the connection portion 100-10, connection portions 100-16 and 100-17 disposed at both ends of the arc of the fan shape, a linear wire 100-10-16 connecting the connection portion 100-10 and the connection portion 100-16 via the switch SW11, an arc-shaped wire 100-16-17 connecting the connection portion 100-16 and the connection portion 100-17 via the switch SW12, and a linear wire 100-10-17 connecting the connection portion 100-10 and the connection portion 100-17 via the switch SW13.

The electrode region 2G has the connection portion 100-10, connection portions 100-17 and 100-18 disposed at both ends of the arc of the fan shape, a linear wire 100-10-17 connecting the connection portion 100-10 and the connection portion 100-17 via the switch SW13, an arc-shaped wire 100-17-18 connecting the connection portion 100-17 and the connection portion 100-18 via the switch SW14, and a linear wire 100-10-18 connecting the connection portion 100-10 and the connection portion 100-18 via the switch SW15.

The electrode region 2H has the connection portion 100-10, connection portions 100-18 and 100-11 disposed at both ends of the arc of the fan shape, a linear wire 100-10-18 connecting the connection portion 100-10 and the connection portion 100-18 via the switch SW15, an arc-shaped wire 100-18-11 connecting the connection portion 100-18 and the connection portion 100-11 via the switch SW16, and a linear wire 100-10-11 connecting the connection portion 100-10 and the connection portion 100-11 via the switch SW1.

### (Third mesh electrode)

As an example, the third mesh electrode 200-3 has a circular mesh structure as a whole, including a plurality of (for example, eight) electrode regions 3A to 3H in a plan view, as shown in Fig. 2C. In a plan view, the eight electrode regions 3A to 3H are in a positional relationship corresponding to the eight electrode regions 2A to 2H (see Fig. 2B), respectively.

The eight electrode regions 3A to 3H are regions in which the mesh structure is divided into eight parts (for example, eight equal parts) in the circumferential direction. That is, each electrode region has a substantially fan shape (for example, the same fan shape). The central angles of the fan shapes of the electrode regions are the same (for example, 45°) as an example. The central angles of the fan shape of each electrode region may be different from each other. Each electrode region has three wires extending along the outer edge of the fan shape and a connection portion connecting the wires at each apex of the fan shape.

The eight electrode regions 3A to 3H share a connection portion 100-19 disposed at the center of the mesh structure.

The electrode regions adjacent to each other in the circumferential direction of the third mesh electrode 200-3 share a connection portion disposed at one end of the arc of the fan shape, and share one of the two wires forming the central angle of the fan shape.

The electrode region 3A has the connection portion 100-19, connection portions 100-20 and 100-21 disposed at both ends of the arc of the fan shape, a linear wire 100-19-20 having one end connected to the connection portion 100-19 and the other end connected to the connection portion 100-20, an arc-shaped wire 100-20-21 having one end connected to the connection portion 100-20 and the other end connected to the connection portion 100-21, and a linear wire 100-19-21 having one end connected to the connection portion 100-19 and the other end connected to the connection portion 100-21.

The electrode region 3B has the connection portion 100-19, connection portions 100-21 and 100-22 disposed at both ends of the arc of the fan shape, a linear wire 100-19-21 having one end connected to the connection portion 100-19 and the other end connected to the connection portion 100-22, an arc-shaped wire 100-21-22 having one end connected to the connection portion 100-21 and the other end connected to the connection portion 100-22, and a linear wire 100-19-22 having one end connected to the connection portion 100-19 and the other end connected to the connection portion 100-19-21.

The electrode region 3C has the connection portion 100-19, connection portions 100-22 and 100-23 disposed at both ends of the arc of the fan shape, a linear wire 100-19-21 having one end connected to the connection portion 100-19 and the other end connected to the connection portion 100-21, an arc-shaped wire 100-22-23 having one end connected to the connection portion 100-22 and the other end connected to the connection portion 100-23, and a linear wire 100-19-23 having one end connected to the connection portion 100-19 and the other end connected to the connection portion 100-23.

The electrode region 3D has the connection portion 100-19, connection portions 100-23 and 100-24 disposed at both ends of the arc of the fan shape, a linear wire 100-19-23 having one end connected to the connection portion 100-19 and the other end connected to the connection portion 100-23, an arc-shaped wire 100-23-24 having one end connected to the connection portion 100-23 and the other end connected to the connection portion 100-24, and a linear wire 100-19-24 having one end connected to the connection portion 100-19 and the other end connected to the connection portion 100-24.

The electrode region 3E has the connection portion 100-19, connection portions 100-24 and 100-25 disposed at both ends of the arc of the fan shape, a linear wire 100-19-24 having one end connected to the connection portion 100-19 and the other end connected to the connection portion 100-24, an arc-shaped wire 100-24-25 having one end connected to the connection portion 100-24 and the other end connected to the connection portion 100-25, and a linear wire 100-19-25 having one end connected to the connection portion 100-19 and the other end connected to the connection portion 100-25.

The electrode region 3F has the connection portion 100-19, connection portions 100-25 and 100-26 disposed at both ends of the arc of the fan shape, a linear wire 100-19-25 having one end connected to the connection portion 100-19 and the other end connected to the connection portion 100-25, an arc-shaped wire 100-25-26 having one end connected to the connection portion 100-25 and the other end connected to the connection portion 100-26, and a linear wire 100-19-26 having one end connected to the connection portion 100-19 and the other end connected to the connection portion 100-26.

The electrode region 3G has the connection portion 100-19, connection portions 100-26 and 100-27 disposed at both ends of the arc of the fan shape, a linear wire 100-19-26 having one end connected to the connection portion 100-19 and the other end connected to the connection portion 100-26, an arc-shaped wire 100-26-27 having one end connected to the connection portion 100-26 and the other end connected to the connection portion 100-27, and a linear wire 100-19-27 having one end connected to the connection portion 100-19 and the other end connected to the connection portion 100-27.

The electrode region 3H has the connection portion 100-19, connection portions 100-27 and 100-20 disposed at both ends of the arc of the fan shape, a linear wire 100-19-27 having one end connected to the connection portion 100-19 and the other end connected to the connection portion 100-27, an arc-shaped wire 100-27-20 having one end connected to the connection portion 100-27 and the other end connected to the connection portion 100-20, and a linear wire 100-19-20 having one end connected to the connection portion 100-19 and the other end connected to the connection portion 100-20.

### (Filter)

As shown in Figs. 2 and 3, as an example, the filter 10 is divided into eight parts (for example, eight equal parts) around the axis by the first to third mesh electrodes 200-1, 200-2, and 200-3, and has sixteen regions (first to sixteenth regions) divided into two parts (for example, two equal parts) in the axial direction.

Each region of the filter 10 is a region between two electrode regions facing each other in the axial direction of the filter 10.

For example, as shown in Fig. 4, the first region 10-1 of the filter 10 is a region between the electrode region 1A of the first mesh electrode 200-1 and the electrode region 2A of the second mesh electrode 200-2.

For example, the second region of the filter 10 is a region between the electrode region 1B of the first mesh electrode 200-1 and the electrode region 2B of the second mesh electrode 200-2.

For example, the third region of the filter 10 is a region between the electrode region 1C of the first mesh electrode 200-1 and the electrode region 2C of the second mesh electrode 200-2.

For example, the fourth region of the filter 10 is a region between the electrode region 1D of the first mesh electrode 200-1 and the electrode region 2D of the second mesh electrode 200-2.

For example, the fifth region of the filter 10 is a region between the electrode region 1E of the first mesh electrode 200-1 and the electrode region 2E of the second mesh electrode 200-2.

For example, the sixth region of the filter 10 is a region between the electrode region 1F of the first mesh electrode 200-1 and the electrode region 2F of the second mesh electrode 200-2.

For example, the seventh region of the filter 10 is a region between the electrode region 1G of the first mesh electrode 200-1 and the electrode region 2G of the second mesh electrode 200-2.

For example, the eighth region of the filter 10 is a region between the electrode region 1H of the first mesh electrode 200-1 and the electrode region 2H of the second mesh electrode 200-2.

For example, the ninth region of the filter 10 is a region between the electrode region 2A of the second mesh electrode 200-2 and the electrode region 3A of the third mesh electrode 200-3.

For example, the tenth region of the filter 10 is a region between the electrode region 2B of the second mesh electrode 200-2 and the electrode region 3B of the third mesh electrode 200-3.

For example, the eleventh region of the filter 10 is a region between the electrode region 2C of the second mesh electrode 200-2 and the electrode region 3C of the third mesh electrode 200-3.

For example, the twelfth region of the filter 10 is a region between the electrode region 2D of the second mesh electrode 200-2 and the electrode region 3D of the third mesh electrode 200-3.

For example, the thirteenth region of the filter 10 is a region between the electrode region 2E of the second mesh electrode 200-2 and the electrode region 3E of the third mesh electrode 200-3.

For example, the fourteenth region of the filter 10 is a region between the electrode region 2F of the second mesh electrode 200-2 and the electrode region 3F of the third mesh electrode 200-3.

For example, the fifteenth region of the filter 10 is a region between the electrode region 2G of the second mesh electrode 200-2 and the electrode region 3G of the third mesh electrode 200-3.

For example, the sixteenth region of the filter 10 is a region between the electrode region 2H of the second mesh electrode 200-2 and the electrode region 3H of the third mesh electrode 200-3.

### (Control device)

The control device 30 is composed of hardware including, for example, a CPU, a chipset, and the like.

Functionally, as shown in Fig. 5, the control device 30 includes a contaminated region determining unit 30-1 and an energization control unit 30-2 as an example.

The contaminated region determining unit 30-1 determines a contaminated region from a plurality of regions (for example, first to sixteenth regions) of the filter 10 based on the measurement results from the electrical resistance measuring unit 40 described later.

As an example, the contaminated region determining unit 30-1 determines a region having a contamination level equal to or higher than a threshold value among a plurality of regions of the filter 10 as a contaminated region.

There are a plurality of contamination levels (for example, 10 levels of contamination levels 0 to 9), and any contamination level can be set to the threshold value. As for the contamination level, the larger the value, the higher the contamination level. The contamination level 0 indicates a state in which the filter 10 is almost completely uncontaminated (a new state or a state very close to a new state). Details of the determination method in the contaminated region determining unit 30-1 will be described later.

The energization control unit 30-2 supplies energy for reducing the contamination level only in a part of the plurality of regions of the filter 10 (for example, the first to sixteenth regions) determined to be the contaminated region by the contaminated region determining unit 30-1.

At this time, it is preferable that the energization control unit 30-2 supplies energy such that the region determined to be the contaminated region of the filter 10 has a contamination level of 0.

Specifically, the energization control unit 30-2 can selectively apply a voltage to at least one electrode region pair among a plurality of electrode region pairs composed of facing electrode regions of two facing mesh electrodes.

More specifically, the energization control unit 30-2 can individually control the on/off of the switches SW1 to SW16 (see Fig. 8B).

The energization control unit 30-2 can apply a voltage V between the facing (corresponding) connection portions of the second mesh electrode 200-2 and the first mesh electrode 200-1. The energization control unit 30-2 can apply a voltage V between the facing (corresponding) connection portions of the second mesh electrode 200-2 and the first mesh electrode 200-1.

For example, as shown in Fig. 8, the energization control unit 30-2 can connect the connection portion 100-11 of the second mesh electrode 200-2 to the positive terminal V+ of the power supply voltage V, and can connect the connection portion 100-2 of the first mesh electrode 200-1 and/or the connection portion 100-20 of the third mesh electrode 200-3 to the negative terminal V- of the power supply voltage V.

For example, the energization control unit 30-2 can connect the connection portion 100-13 of the second mesh electrode 200-2 to the positive terminal V+ of the power supply voltage V and can connect the connection portion 100-4 of the first mesh electrode 200-1 and/or the connection portion 100-22 of the third mesh electrode 200-3 to the negative terminal V- of the power supply voltage V.

For example, the energization control unit 30-2 can connect the connection portion 100-15 of the second mesh electrode 200-2 to the positive terminal V+ of the power supply voltage V and can connect the connection portion 100-6 of the first mesh electrode 200-1 and/or the connection portion 100-24 of the third mesh electrode 200-3 to the negative terminal V- of the power supply voltage V.

For example, the energization control unit 30-2 can connect the connection portion 100-17 of the second mesh electrode 200-2 to the positive terminal V+ of the power supply voltage V and can connect the connection portion 100-8 of the first mesh electrode 200-1 and/or the connection portion 100-26 of the third mesh electrode 200-3 to the negative terminal V- of the power supply voltage V.

Here, for example, the energization control unit 30-2 connects the connection portion 100-11 of the second mesh electrode 200-2 to the positive terminal V+ of the power supply voltage V, connects the connection portion 100-2 of the first mesh electrode 200-1 to the negative terminal V- of the power supply voltage V, turns on the switches SW1, SW2, and SW3, and turns off the other switches SW4 to SW16. At this time, only the electrode region 2A becomes an equipotential surface of +V, and only the electrode region 1A becomes an equipotential surface of -V. As a result, the voltage V is applied only to the first region 10-1 (see Fig. 4) of the filter 10, which is the region between the current region 2A and the current region 1A, and the current flows.

For example, the energization control unit 30-2 connects the connection portion 100-11 of the second mesh electrode 200-2 to the positive terminal V+ of the power supply voltage V, connects the connection portion 100-2 of the first mesh electrode 200-1 to the negative terminal V- of the power supply voltage V, turns on the switches SW1, SW15, and SW16, and turns off the other switches SW2 to SW14. At this time, only the electrode region 2H becomes an equipotential surface of +V, and only the electrode region 1H becomes an equipotential surface of -V. As a result, the voltage V is applied only to the eighth region 10-8 of the filter 10, which is the region between the current region 2H and the current region 1H, and the current flows.

For example, the energization control unit 30-2 connects the connection portion 100-11 of the second mesh electrode 200-2 to the positive terminal V+ of the power supply voltage V, connects the connection portion 100-20 of the third mesh electrode 200-3 to the negative terminal V- of the power supply voltage V, turns on the switches SW1, SW2, and SW3, and turns off the other switches SW4 to SW16. At this time, only the electrode region 2A becomes an equipotential surface of +V, and only the electrode region 3A becomes an equipotential surface of -V. As a result, the voltage V is applied only to the ninth region of the filter 10, which is the region between the current region 2A and the current region 3A, and the current flows.

For example, the energization control unit 30-2 connects the connection portion 100-11 of the second mesh electrode 200-2 to the positive terminal V+ of the power supply voltage V, connects the connection portion 100-20 of the third mesh electrode 200-3 to the negative terminal V- of the power supply voltage V, turns on the switches SW1, SW15, and SW16, and turns off the other switches SW2 to SW14. At this time, only the electrode region 2H becomes an equipotential surface of +V, and only the electrode region 3H becomes an equipotential surface of -V. As a result, the voltage V is applied only to the sixteenth region of the filter 10, which is the region between the current region 2H and the current region 3H, and the current flows.

As can be seen from the description, the energization control unit 30-2 applies a voltage V between at least a pair of facing (corresponding) connection portions of the second mesh electrode 200-2 and the first mesh electrode 200-1 and/or between at least a pair of facing (corresponding) connection portions of the second mesh electrode 200-2 and the first mesh electrode 200-1, and appropriately controls the on/off of the switches SW1 to SW16 individually. By doing so, it is possible to energize at least any one region among the plurality of regions (for example, the first to sixteenth regions) of the filter 10.

In this way, the energization control unit 30-2 can selectively energize at least one region of the filter 10 to generate Joule heat in the region and regenerate (purify) the region.

### (Electrical resistance measuring unit)

As shown in Fig. 3, the electrical resistance measuring unit 40 measures the electrical resistance of each of the plurality of regions (for example, the first to sixteenth regions) of the filter 10. The electrical resistance measuring unit 40 includes an ammeter group 400-1-2 disposed between the first and second mesh electrodes 200-1 and 200-2 inside the filter 10, and an ammeter group 400-2-3 disposed between the second and third mesh electrodes 200-2 and 200-3 inside the filter 10.

The ammeter group 400-1-2 includes a plurality of (for example, three) ammeters 400a (24 in total) disposed in each of the first to eighth regions of the filter 10. The ammeter group 400-2-3 includes a plurality of (for example, three) ammeters 400a (24 in total) disposed in each of the ninth to sixteenth regions of the filter 10.

As an example, a plurality of (for example, three) ammeters 400a disposed in each region of the filter 10 are disposed substantially evenly in a plane of the region orthogonal to the axis of the filter 10.

The electrical resistance measuring unit 40 calculates a resistance value (V/I) at an in-plane position of the region where the ammeter 400a is disposed from the measurement value (current value I) of each ammeter 400a disposed in each region of the filter 10, and outputs the calculation result to the contaminated region determining unit 30-1.

The contaminated region determining unit 30-1 obtains a difference (change amount) between the calculation result (resistance value) from the electrical resistance measuring unit 40 based on the measurement value of each ammeter 400a disposed inside the filter 10 and the resistance value measured in advance when the filter 10 is in a new state or a state very close to the new state (hereinafter, both states are also referred to as "reference state"), and evaluates the change amount in ten steps (change amount of 0 to 9). For example, the contaminated region determining unit 30-1 sets the contamination level to 0 when the change amount is 0, and sets the contamination level to 9 when the change amount is 9. Here, when the filter 10 is contaminated, the electrical resistance (resistance value) of the filter 10 changes. The change amount of the electrical resistance (resistance value) increases as the contamination level in each region of the filter 10 increases.

When the difference between at least one resistance value of the resistance values based on the measurement values of the plurality of ammeters 400a disposed in each region of the filter 10 and the resistance value when the filter 10 is in the reference state is equal to or larger than a threshold value (for example, contamination level 5), the contaminated region determining unit 30-1 determines that the region is a contaminated region.

Hereinafter, the control of the filter system 1 according to the first embodiment of the present technology will be described with reference to the flowchart of Fig. 6. By the control of the filter system of the first embodiment described here, an example of the filter cleaning method of the present technology is implemented.

First, in step S1, the energization control unit 30-2 applies a voltage between facing mesh electrodes.

Specifically, the energization control unit 30-2 applies the power supply voltage V between the first and second mesh electrodes 200-1 and 200-2 and between the second and third mesh electrodes 200-2 and 200-3 in a state where all the switches SW are turned on, that is, in a state where all the connection portions of the second mesh electrode 200-2 are conducting. As a result, the power supply voltage V is applied to each region of the filter 10.

Subsequently, in step S2, the electrical resistance measuring unit 40 measures the electrical resistance of each region of the filter 10.

Specifically, the electrical resistance measuring unit 40 calculates the electrical resistance from the measurement values of each ammeter disposed in each region of the filter 10, and outputs the calculation results to the contaminated region determining unit 30-1.

Subsequently, in step S3, the contaminated region determining unit 30-1 calculates the contamination level of each region of the filter 10.

Specifically, the contaminated region determining unit 30-1 obtains the difference between the resistance value based on the measurement value of each ammeter from the electrical resistance measuring unit 40 and the resistance value when the filter 10 is in the reference state, and calculates the contamination level of each region of the filter 10 based on the difference.

Subsequently, in step S4, the contaminated region determining unit 30-1 determines the region where the contamination level is equal to or higher than the threshold value as the contaminated region.

Specifically, the contaminated region determining unit 30-1 determines a region having a contamination level equal to or higher than a threshold value (for example, contamination level 5) as a contaminated region.

Finally, in step S5, the energization control unit 30-2 applies a voltage only between the electrode regions corresponding to the contaminated region. As a result, the power supply voltage V is applied to the contaminated region, and the contaminated region is heated and regenerated (purified).

Here, in the energization control unit 30-2, it is preferable that the voltage applied between the electrode regions corresponding to the contaminated region during the energization in step S5 is larger and an application time of the voltage is not shorter than those during the energization in step S1.

Alternatively, in the energization control unit 30-2, it is preferable that the voltage applied between the electrode regions corresponding to the contaminated region during the energization in step S5 is not smaller and an application time of the voltage is longer than those during the energization in step S 1.

The filter system according to the first embodiment described above includes the filter 10 for capturing particles or molecules, and the cleaning device 20 for cleaning the filter 10, and the cleaning device 20 is a filter system that determines a contaminated region from a plurality of regions of the filter 10 and supplies (applies) energy for reducing a contamination level to only some region determined to be a contaminated region among the plurality of regions.

As a result, energy is supplied to the region determined to be the contaminated region among the plurality of regions of the filter 10, while energy is not supplied to the regions other than the region determined to be the contaminated region among the plurality of regions of the filter 10.

As a result, it is possible to provide the cleaning device 20 and a filter system that can clean the filter 10 while suppressing the life of the filter 10 from being shortened.

The cleaning device determines the region where the contamination level is equal to or higher than the threshold value among the plurality of regions of the filter 10 as a contaminated region. As a result, the criteria for determining the contaminated region are clear, and the contaminated region can be easily determined.

The cleaning device preferably supplies energy such that the contamination level becomes 0. In this way, it is possible to bring the performance of the filter 10 closer to the initial performance.

The cleaning device includes a mesh electrode group having at least one (for example, two) mesh electrode pairs composed of a pair of mesh electrodes (first and second mesh electrodes 200-1, 200-2 or second and third mesh electrodes 200-2 and 200-3) disposed so as to sandwich at least two of the plurality of regions inside the filter 10, an energization unit including a plurality of switches SW and the energization control unit 30-2, capable of selectively applying a voltage between facing electrode regions of the pair of mesh electrodes, the electrical resistance measuring unit 40 that measures the electrical resistance of each of the plurality of regions of the filter 10 when the energization unit performs first energization of applying a voltage between all electrode regions of the mesh electrode pair, and the contaminated region determining unit 30-1 that determines a contaminated region from the plurality of regions of the filter 10 based on the measurement result from the electrical resistance measuring unit 40. The energization unit performs second energization of applying a voltage between the electrode regions corresponding to the region determined to be a contaminated region by the contaminated region determining unit 30-1 among all electrode regions of the mesh electrode pair.

During the second energization, the voltage applied between the electrode regions corresponding to the contaminated region may be larger and an application time of the voltage may not be shorter than those during the first energization. As a result, it is possible not to supply more energy than necessary to the filter 10 when determining the contaminated region, and it is possible to supply sufficient energy to the filter 10 when cleaning (regenerating) the contaminated region.

During the second energization, the voltage applied between the electrode regions corresponding to the contaminated region may not be smaller and an application time of the voltage may be longer than those during the first energization. As a result, it is possible not to supply more energy than necessary to the filter 10 when determining the contaminated region, and it is possible to supply sufficient energy to the filter 10 when cleaning (regenerating) the contaminated region.

The filter cleaning method using the filter system according to the first embodiment of the present technology (an example of the filter cleaning method of the present technology) is a filter cleaning method including a step of determining a contaminated region from a plurality of regions of the filter 10 that captures particles or molecules, and a step of supplying energy for reducing the contamination level only to some region determined to be a contaminated region among the plurality of regions of the filter 10.

As a result, energy is supplied to the region determined to be the contaminated region among the plurality of regions of the filter 10, while energy is not supplied to the regions other than the region determined to be the contaminated region among the plurality of regions of the filter 10.

As a result, it is possible to provide a filter cleaning method capable of cleaning the filter 10 while suppressing the life of the filter 10 from being shortened.

In the determining step, the region where the contamination level is equal to or higher than the threshold value among the plurality of regions of the filter 10 is determined as the contaminated region. As a result, the criteria for determining the contaminated region are clear, and the contaminated region can be easily determined.

In the supplying step, the energy such that the contamination level becomes 0 may be supplied. In this way, it is possible to bring the performance of the filter 10 to the initial performance as closer as possible.

### 3. <Filter system according to second embodiment of present technology>

Hereinafter, the filter system according to the second embodiment of the present technology will be described with reference to Figs. 7 to 12.

As shown in Figs. 7 and 11, the filter system according to the second embodiment includes a filter 10 and a cleaning device 20A.

As shown in Fig. 11, the cleaning device 20A includes a plurality of (for example, two) optical fiber devices (for example, first and second optical fiber devices 500-1 and 500-2) and a light emission control unit 30-3 that controls each optical fiber device in addition to the configuration of the cleaning device 20 shown in Fig. 5.

The first and second optical fiber devices 500-1 and 500-2 are provided inside the filter 10.

More specifically, as shown in Figs. 7 to 9, the first optical fiber device 500-1 is disposed between the first and second mesh electrodes 200-1 and 200-2.

More specifically, the first optical fiber device 500-1 is disposed between the first and second mesh electrodes 200-1 and 200-2 at a position offset from a current path (approximately parallel to the axial direction of the filter 10) passing through the ammeter 400a.

The second optical fiber device 500-2 is disposed between the second and third mesh electrodes 200-2 and 200-3.

More specifically, the second optical fiber device 500-2 is disposed between the second and third mesh electrodes 200-2 and 200-3 at a position offset from a current path (approximately parallel to the axial direction of the filter 10) passing through the ammeter 400a.

As an example, as shown in Figs. 8B and 8C, each optical fiber device includes an optical fiber ring 500b composed of a ring-shaped optical fiber and a plurality of (for example, eight) optical fiber branches 500a (branched end-face-emitting optical fiber s) extending outward (for example, eight directions) from the optical fiber ring 500b.

A supply optical fiber that supplies light from a light source is connected to each optical fiber ring 500b. The light from the light source may be, for example, ultraviolet rays having a sterilizing effect or far-infrared rays having a thermal effect.

Each optical fiber branch 500a has a trunk and a plurality of (for example, three) branches branched from the trunk, and the end surface of each branch serves as a light emitting surface (see Fig. 10).

The optical fiber ring 500b and each optical fiber branch 500a are connected via a switch SW'. The switch SW' has, for example, an electromagnetic shutter for blocking and guiding light, and on/off of the light guide from the inside of the optical fiber ring 500b into the optical fiber branch 500a is controlled by the opening/closing of the shutter.

The optical fiber branch 500a is provided in the filter 10 so that at least the end face of the branch is disposed in each of the plurality of regions of the filter 10. Specifically, each of the plurality of (for example, eight) optical fiber branches 500a of the first optical fiber device 500-1 is disposed in the first to eighth regions of the filter 10.

For example, as shown in Fig. 10, the light emitted from the end faces of the plurality of branches of the optical fiber branch 500a disposed in the first region 10-1 of the filter 10 is radiated to almost the entire area of the first region 10-1 as an example. Similarly for the other regions of the filter 10, the light emitted from the end faces of the plurality of branches of the optical fiber branch 500a disposed in the region is radiated to almost the entire area of the region.

In the second embodiment, in the control device 30A, the determination result (information on which of the plurality of regions of the filter 10 is the contaminated region) from the contaminated region determining unit 30-1 is also transmitted to the light emission control unit 30-3. The light emission control unit 30-3 causes the optical fiber branch 500a corresponding to the contaminated region among the optical fiber branches 500a of the first and second optical fiber devices 500-1 and 500-2 to emit light.

Hereinafter, the operation of the filter system according to the second embodiment will be described with reference to the flowchart of Fig. 12. By the control of the filter system of the second embodiment described here, an example of the filter cleaning method of the present technology is implemented.

First, in step S11, the energization control unit 30-2 applies a voltage between the facing mesh electrodes.

Specifically, the energization control unit 30-2 applies the power supply voltage V between the first and second mesh electrodes 200-1 and 200-2 and between the second and third mesh electrodes 200-2 and 200-3 in a state where all the switches SW are turned on, that is, in a state where all the connection portions of the second mesh electrode 200-2 are conducting. As a result, the power supply voltage V is applied to each region of the filter 10.

Subsequently, in step S12, the electrical resistance measuring unit 40 measures the electrical resistance of each region of the filter 10.

Specifically, the electrical resistance measuring unit 40 calculates the electrical resistance from the measurement values of each ammeter disposed in each region of the filter 10, and outputs the calculation result to the contaminated region determining unit 30-1.

Subsequently, in step S13, the contaminated region determining unit 30-1 calculates the contamination level of each region of the filter 10.

Specifically, the contaminated region determining unit 30-1 obtains the difference between the resistance value based on the measurement value of each ammeter from the electrical resistance measuring unit 40 and the resistance value when the filter 10 is in the reference state, and calculates the contamination level of each region of the filter 10 based on the difference.

Subsequently, in step S14, the contaminated region determining unit 30-1 determines the region where the contamination level is equal to or higher than the threshold value as the contaminated region.

Specifically, the contaminated region determining unit 30-1 determines a region having a contamination level equal to or higher than a threshold value (for example, contamination level 5) as a contaminated region.

Subsequently, in step S15, the energization control unit 30-2 applies a voltage only between the electrode regions corresponding to the contaminated region.

As a result, the power supply voltage V is applied to the contaminated region, and the contaminated region is heated and regenerated (purified).

Here, in the energization control unit 30-2, it is preferable that the voltage applied between the electrode regions corresponding to the contaminated region during the energization in step S15 is larger and an application time of the voltage is shorter than those during the energization in step S11.

Alternatively, in the energization control unit 30-2, it is preferable that the voltage applied between the electrode regions corresponding to the contaminated region during the energization in step S15 is not smaller and an application time of the voltage is longer than those during the energization in step S11.

Finally, in step S16, the light emission control unit 30-3 causes only the optical fiber branch 500a corresponding to the contaminated region to emit light. Specifically, only the switch SW' that turns on/off the light guide to the optical fiber branch 500a corresponding to the contaminated region is opened, and the other switches SW' are closed.

In the filter system according to the second embodiment described above, the cleaning device 20A performs cleaning (regeneration) by energizing the contaminated region in the same manner as the cleaning device 20 of the filter system according to the first embodiment.

The cleaning device 20A includes an optical fiber branch 500a (branched end-face-emitting optical fiber) provided in the filter 10 so that at least the end face of the branch is disposed in each of the plurality of regions and a light emission control unit 20-3 capable of individually controlling the light emission of the plurality of optical fiber branches 500a. The light emission control unit 20-3 causes only the optical fiber branch 500a corresponding to the contaminated region among the plurality of optical fiber branches 500a to emit light.

As described above, since the cleaning device 20A supplies (applies) both thermal energy and light energy to the contaminated region, it is possible to obtain both a cleaning effect unique to thermal energy and a cleaning effect unique to light energy.

The cleaning device 20A can supply less thermal energy to the contaminated region than, for example, the cleaning device 20. That is, the cleaning device 20A can also clean the contaminated region while reducing the damage caused by heating the contaminated region of the filter 10.

### 4. <Filter system according to third embodiment of present technology>

Hereinafter, the filter system according to the third embodiment of the present technology will be described.

The filter system according to the third embodiment has the same configuration as the filter system according to the second embodiment, but differs only in control.

Specifically, in the third embodiment, only the optical fiber branch 500a corresponding to the contaminated region emits light, and the voltage is not applied between the electrode regions corresponding to the contaminated region.

Hereinafter, the operation of the filter system according to the third embodiment will be described with reference to the flowchart of Fig. 13. By the control of the filter system of the third embodiment described here, an example of the filter cleaning method of the present technology is implemented.

First, in step S21, the energization control unit 30-2 applies a voltage between the facing mesh electrodes.

Specifically, the energization control unit 30-2 applies the power supply voltage V between the first and second mesh electrodes 200-1 and 200-2 and between the second and third mesh electrodes 200-2 and 200-3 in a state where all the switches SW are turned on, that is, in a state where all the connection portions of the second mesh electrode 200-2 are conducting. As a result, the power supply voltage V is applied to each region of the filter 10.

Subsequently, in step S22, the electrical resistance measuring unit 40 measures the electrical resistance of each region of the filter 10.

Specifically, the electrical resistance measuring unit 40 calculates the electrical resistance from the measurement values of each ammeter disposed in each region of the filter 10, and outputs the calculation result to the contaminated region determining unit 30-1.

Subsequently, in step S23, the contaminated region determining unit 30-1 calculates the contamination level of each region of the filter 10.

Specifically, the contaminated region determining unit 30-1 obtains the difference between the resistance value based on the measurement value of each ammeter from the electrical resistance measuring unit 40 and the resistance value when the filter 10 is in the reference state, and calculates the contamination level of each region of the filter 10 based on the difference.

Subsequently, in step S24, the contaminated region determining unit 30-1 determines the region where the contamination level is equal to or higher than the threshold value as the contaminated region.

Specifically, the contaminated region determining unit 30-1 determines a region having a contamination level of, for example, a contamination level of 5 or higher as a contaminated region.

Finally, in step S25, the light emission control unit 30-3 causes only the optical fiber branch corresponding to the contaminated region to emit light.

Specifically, only the switch SW' that turns on/off the light guide to the optical fiber branch corresponding to the contaminated region is opened, and the other switches SW' are closed.

In the filter system of the third embodiment described above, the cleaning device includes a mesh electrode group having at least one (for example, two) mesh electrode pairs composed of a pair of mesh electrodes (first and second mesh electrodes 200-1, 200-2 or second and third mesh electrodes 200-2 and 200-3) disposed so as to sandwich at least two of the plurality of regions inside the filter 10, an energization unit including a plurality of switches SW and the energization control unit 30-2, capable of selectively applying a voltage between facing electrode regions of the pair of mesh electrodes, the electrical resistance measuring unit 40 that measures the electrical resistance of each of the plurality of regions of the filter when the energization unit performs first energization of applying a voltage between all electrode regions of the mesh electrode pair, the contaminated region determining unit 30-1 that determines a contaminated region from the plurality of regions of the filter 10 based on the measurement result from the electrical resistance measuring unit 40, the optical fiber branch 500a provided in the filter 10 so that at least the end face of the branch is disposed in each of the plurality of regions of the filter 10, and the light emission control unit 30-3 capable of individually controlling light emission of the plurality of (for example, sixteen) optical fiber branches 500a. The light emission control unit 30-3 causes only the optical fiber branch 500a corresponding to the contaminated region among the plurality of optical fiber branches 500a to emit light.

As a result, it is possible to clean the filter 10 by supplying only light energy to the filter 10. That is, it is possible to obtain a cleaning effect by light energy while suppressing damage to the filter 10.

### 5. <Filter system according to fourth embodiment of present technology>

Hereinafter, the filter system according to the fourth embodiment of the present technology will be described with reference to Fig. 14.

In the filter system according to the fourth embodiment, as shown in Figs. 14A and 14B, the cleaning device includes a plurality of (for example, four) air blowers (for example, air blowers 600-1 to 600-4) that blows air to the filter 10 from different directions and a measuring unit including a plurality of (for example, sixteen) airflow sensors (for example, airflow sensors 700-1 to 700-16), for measuring the amount of the air passing through at least one (for example, two) of a plurality of (for example, sixteen) regions (for example, first to sixteenth regions) of the filter 10.

By the way, each region of the filter 10 is a region sandwiched between facing electrode regions (see Figs. 2 and 3).

Therefore, the plurality of regions of the filter 10 are denoted as a first region 1A-2A, a second region 1B-2B, a third region 1C-2C, a fourth region 1D-2D, a fifth region 1E-2E, a sixth region 1F-2F, a seventh region 1G-2G, an eighth region 1H-2H, a ninth region 2A-3A, a tenth region 2B-3B, an eleventh region 2C-3C, a twelfth region 2D-3D, a thirteenth region 2E-3E, a fourteenth region 2F-3F, a fifteenth region 2G-3G, and a sixteenth region 2H-3H.

The air blower 600-1 is disposed at a position where air can be blown out from a first direction orthogonal to the axial direction of the filter 10 into the first to eighth regions 1A-2A to 1H to 2H of the filter 10.

The air blower 600-2 is disposed at a position where air can be blown out from a second direction that is not orthogonal to the axial direction of the filter 10 and the first direction into the first to eighth regions 1A-2A to 1H to 2H of the filter 10.

The air blower 600-3 is disposed at a position where air can be blown out from a third direction orthogonal to the axial direction of the filter 10 into the ninth to sixteenth regions 2A-3A to 2H to 3H of the filter 10.

The air blower 600-4 is disposed at a position where air can be blown out from a fourth direction that is not orthogonal to the axial direction of the filter 10 and the third direction into the ninth to sixteenth regions 2A-3A to 2H to 3H of the filter 10.

Each air blower has an air outlet having a size capable of blowing air over the entire radial direction of the filter 10.

The plurality of (for example, four) airflow sensors 700-1 to 700-4 are disposed on the flow path of air that has been blown out from the air blower 600-2 and has passed through each of a plurality of (for example, four) different locations in the radial directions of the filter 10.

For example, the airflow sensor 700-1 is disposed on the flow path of air that has blown out from the air blower 600-2 and has passed through the first region 1A-2A and the eighth region 1H-2H of the filter 10.

For example, the airflow sensor 700-2 is disposed on the flow path of air that has blown out from the air blower 600-2 and has passed through the second region 1B-2B and the seventh region 1G-2G of the filter 10.

For example, the airflow sensor 700-3 is disposed on the flow path of air that has blown out from the air blower 600-2 and has passed through the third region 1C-2C and the sixth region 1F-2F of the filter 10.

For example, the airflow sensor 700-4 is disposed on the flow path of air that has blown out from the air blower 600-2 and has passed through the fourth region 1D-2D and the fifth region 1E-2E of the filter 10.

The plurality of (for example, four) airflow sensors 700-5 to 700-8 are disposed on the flow path of air that has been blown out from the air blower 600-1 and has passed through each of a plurality of (for example, four) different locations in the radial directions of the filter 10.

For example, the airflow sensor 700-5 is disposed on the flow path of air that has blown out from the air blower 600-1 and has passed through the second region 1B-2B and the third region 1C-2C of the filter 10.

For example, the airflow sensor 700-6 is disposed on the flow path of air that has blown out from the air blower 600-1 and has passed through the first region 1A-2A and the fourth region 1D-2D of the filter 10.

For example, the airflow sensor 700-7 is disposed on the flow path of air that has blown out from the air blower 600-1 and has passed through the eighth region 1H-2H and the fifth region 1E-2E of the filter 10.

For example, the airflow sensor 700-8 is disposed on the flow path of air that has blown out from the air blower 600-1 and has passed through the seventh region 1G-2G and the sixth region 1F-2F of the filter 10.

The plurality of (for example, four) airflow sensors 700-9 to 700-12 are disposed on the flow path of air that has been blown out from the air blower 600-4 and has passed through each of a plurality of (for example, four) different locations in the radial directions of the filter 10.

For example, the airflow sensor 700-9 is disposed on the flow path of air that has blown out from the air blower 600-4 and has passed through the ninth region 2A-3A and the sixteenth region 2H-3H of the filter 10.

For example, the airflow sensor 700-10 is disposed on the flow path of air that has blown out from the air blower 600-4 and has passed through the tenth region 2B-3B and the fifteenth region 2G-3G of the filter 10.

For example, the airflow sensor 700-11 is disposed on the flow path of air that has blown out from the air blower 600-4 and has passed through the eleventh region 2C-3C and the fourteenth region 2F-3F of the filter 10.

For example, the airflow sensor 700-12 is disposed on the flow path of air that has blown out from the air blower 600-4 and has passed through the twelfth region 2D-3D and the thirteenth region 2E-3E of the filter 10.

The plurality of (for example, four) airflow sensors 700-13 to 700-16 are disposed on the flow path of air that has been blown out from the air blower 600-3 and has passed through each of a plurality of (for example, four) different locations in the radial directions of the filter 10.

For example, the airflow sensor 700-13 is disposed on the flow path of air that has blown out from the air blower 600-3 and has passed through the tenth region 2B-3B and the eleventh region 2C-3C of the filter 10.

For example, the airflow sensor 700-14 is disposed on the flow path of air that has blown out from the air blower 600-3 and has passed through the ninth region 2A-3A and the twelfth region 2D-3D of the filter 10.

For example, the airflow sensor 700-15 is disposed on the flow path of air that has blown out from the air blower 600-3 and has passed through the sixteenth region 2H-3H and the thirteenth region 2E-3E of the filter 10.

For example, the airflow sensor 700-16 is disposed on the flow path of air that has blown out from the air blower 600-3 and has passed through the fifteenth region 2G-3G and the fourteenth region 2F-3F of the filter 10.

Here, in Figs. 14A and 14B, as an example, the air blown out from each air blower and the air flowing into each airflow sensor are represented by arrows, and the larger the size of the arrow, the stronger the airflow.

The contamination level of each of the first to eighth regions 1A-2A to 1H to 2H of the filter 10 can be determined by the measurement values from the eight airflow sensors 700-1 to 700-8.

Specifically, in Fig. 14A, for example, when the measurement value from the airflow sensor 700-2 is low, it can be seen that the airflow of the air passing through the second region 1B-2B and the seventh region 1G-2G is weak. That is, it can be seen that at least one of the second region 1B-2B and the seventh region 1G-2G has a high contamination level (clogging degree).

Further, in Fig. 14A, for example, when the measurement value from the airflow sensor 700-8 is high, it can be seen that the airflow of the air passing through the sixth region 1F-2F and the seventh region 1G-2G is strong. That is, it can be seen that both the sixth region 1F-2F and the seventh region 1G-2G has a low contamination level (clogging degree).

Therefore, it can be seen that the contamination level of the second region 1B-2B is high. Therefore, in Fig. 14A, the contaminated region determining unit can determine, for example, the second region 1B-2B as a contaminated region.

The contamination level of each of the ninth to sixteenth regions 2A-3A to 2H to 3H of the filter 10 can be determined by the measurement values from the eight airflow sensors 700-9 to 700-16.

Specifically, in Fig. 14B, for example, when the measurement value from the airflow sensor 700-10 is low, it can be seen that the contamination level (clogging degree) of at least one of the tenth region 2B-3B and the fifteenth region 2G-3G is high.

Further, in Fig. 14B, for example, when the measurement value from the airflow sensor 700-13 is high, it can be seen that both the tenth region 2B-3B and the eleventh region 2C-3C has a low contamination level (clogging degree). Therefore, it can be seen that the contamination level of the fifteenth region 2G-3G is high.

Further, in Fig. 14B, for example, when the measurement value from the airflow sensor 700-11 is low, it can be seen that the contamination level (clogging degree) of the fourteenth region 2F-3F is high.

Further, in Fig. 14B, for example, when the measurement value from the airflow sensor 700-15 is low, it can be seen that the contamination level (clogging degree) of at least one of the sixteenth region 2H-3H and the thirteenth region 2E-3E is high.

Further, in Fig. 14B, for example, when the measurement value from the airflow sensor 700-9 is high, it can be seen that both the sixteenth region 2H-3H and the ninth region 2A-3A has a low contamination level (clogging degree).

Therefore, it can be seen that the contamination level (clogging degree) of the thirteenth region 2E-3E is high.

From the above, the contaminated region determining unit can determine, for example, the fourteenth to sixteenth regions 2E-3E to 2G-3G as the contaminated region in Fig. 14B.

In the fourth embodiment, for example, at least one air blower that can appear and disappear in the inflow path of the airflow AF to the filter 10 or the outflow path of the airflow AF from the filter 10 may be provided, and air may be blown from the air blower in a direction substantially parallel to the axis of the filter 10. In this way, it is possible to improve the determination accuracy of the contaminated region.

In the filter system according to the fourth embodiment described above, the cleaning device includes an air blower that blows air to the filter 10, a measuring unit including the plurality of airflow sensors 700, for measuring the amount of the air passing through at least one of the plurality of regions of the filter 10, and the contaminated region determining unit that determines whether or not each of the plurality of regions is a contaminated region based on the measurement results from the measuring unit.

As a result, since thermal energy is not supplied to the filter 10 when determining the contaminated region, damage to the filter 10 can be reduced.

In the filter system according to the fourth embodiment, it is preferable that the filter 10 is provided with a plurality of mesh electrodes and/or a plurality of optical fiber branches to perform cleaning with thermal energy and/or light energy.

However, in the filter system according to the fourth embodiment, the contaminated region is determined by the amount of air passing through the filter 10. Therefore, when it is not necessary to apply a voltage between the electrode regions of facing mesh electrodes when cleaning the contaminated region, the filter 10 may not be provided with a plurality of mesh electrodes.

### 6. <Filter system according to fifth embodiment of present technology>

Hereinafter, the filter system according to the fifth embodiment of the present technology will be described with reference to Figs. 15 and 16.

In the fifth embodiment, as shown in Fig. 15, the cleaning device includes a plurality of (for example, two) imaging units (for example, first and second imaging units 800-1 and 800-2) that images a plurality of (for example, sixteen) regions (for example, first to sixteenth regions) of the filter 10.

The first imaging unit 800-1 is disposed at a position where, for example, the surface 10A of the filter 10 on the inflow side of the airflow AF can be imaged and the inflow of the airflow AF into the filter 10 is not hindered.

The second imaging unit 800-2 is disposed at a position where, for example, the surface 10B of the filter 10 on the outflow side of the airflow AF can be imaged and the outflow of the airflow AF from the filter 10 is not hindered.

Each imaging unit includes, for example, an image sensor and a lens that condenses the light reflected by an object on the image sensor.

In Fig. 16A, for example, an example in which an image (black-and-white image or color image) of the surface 10A of the filter 10 on the inflow side of the airflow AF captured by the first imaging unit 800-1 when a light-colored filter 10 is used is shown.

In the captured image, it is considered that the darker the color, the more stains are attached and the higher the contamination level is.

In Fig. 16A, the contaminated region determining unit can determine, for example, the first region 1A-2A and the second region 1B-2B (both see Fig. 14) including the darkest colored part as the contaminated region.

In Fig. 16B, for example, an example in which an image (black-and-white image or color image) of the surface 10B of the filter 10 on the outflow side of the airflow AF captured by the second imaging unit 800-1 when a light-colored filter 10 is used is shown.

In the captured image, the darker the color, the more stains are attached and the higher the contamination level is.

In Fig. 16B, the contaminated region determining unit can determine, for example, the fourteenth region 2F-3F and the fifteenth region 2G-3G (both see Fig. 14) including the darkest colored part as the contaminated region.

In the filter system of the fifth embodiment described above, the cleaning device includes an imaging unit that images a plurality of regions of the filter 10 and a contaminated region determining unit that determines a contaminated region from the plurality of regions of the filter 10 based on the imaging results from the imaging unit. As a result, it is possible to determine the contaminated region based on the shade of color in the imaging results (captured images) of the plurality of regions from the imaging unit.

In the above, for example, a light-colored filter is used to determine a darker-colored part of the captured image as a contaminated region, but conversely, for example, a dark-colored filter is used to determine a lighter-colored part of the captured image as a contaminated region.

In the filter system according to the fifth embodiment, it is preferable that the filter 10 is provided with a plurality of mesh electrodes and/or a plurality of optical fiber branches to perform cleaning with thermal energy and/or light energy.

### 7. <Modification example of present technology>

The configuration of the filter system of each embodiment described above can be changed as appropriate.

For example, at least some of the configurations of the embodiments may be combined with each other within a technically consistent range.

For example, the number of mesh electrodes, the number and shape of the electrode regions of each mesh electrode, and the like in each of the embodiments can be appropriately changed.

In each of the embodiments, the plurality of regions of the filter 10 are three-dimensionally arranged (divided three-dimensionally) by mesh electrodes, but may be, for example, two-dimensionally arranged (divided two-dimensionally) or one-dimensionally arranged (divided one-dimensionally, that is, divided in one direction).

The filter 10 is not limited to a cylindrical shape, and, for example, the cross-section may have other shapes such as a columnar shape, a flat plate shape, and a curved shape other than a circular shape.

In the first to third embodiments, the resistance value (electrical resistance) when a voltage is applied to each region of the filter 10 is measured, but instead, for example, the current flowing in the region may be measured, the difference from the current flowing through the filter 10 in the reference state may be obtained, and the difference may be evaluated as a contamination level.

In each of the embodiments, the cleaning device supplies energy only to the region determined to be the contaminated region among the plurality of regions of the filter 10, but the present invention is not limited to this.

For example, the filter cleaning device according to the present technology and the cleaning device of the filter system according to the present technology can detect the contamination level of each of a plurality of regions of the filter 10 and can supply energy individually to the plurality of regions of the filter 10 in the same manner as the cleaning device of each of the above-described embodiments and may adjust the magnitude (including 0) of the energy supplied to each of the plurality of regions based on the detected contamination level of each of the plurality of regions. For example, the higher the contamination level of the region, the larger the energy supplied.

As a result, since each region of the filter 10 can be cleaned with energy corresponding to the contamination level, the filter 10 can be cleaned while saving energy.

In each of the embodiments, the filter 10 is disposed in the flow path of the airflow AF, but the present invention is not limited to this.

For example, the filter 10 may be placed in the gas phase regardless of the presence of the flow of air to capture particles or molecules in the gas phase. Then, the filter 10 may be cleaned by a cleaning device (filter cleaning device). For example, the filter 10 may be placed in a liquid phase (for example, in water) to capture particles or molecules in the liquid phase. Then, the filter 10 may be cleaned by a cleaning device (filter cleaning device). In this case, the filter 10 may be used, for example, for purifying water.

The present technology can be configured as follows.
(1) A filter cleaning device that determines a contaminated region from a plurality of regions of a filter that captures particles or molecules, and supplies energy for reducing a contamination level to some of the plurality of regions determined as the contaminated region.
(2) The filter cleaning device according to (1), wherein a region having a contamination level equal to or higher than a threshold value among the plurality of regions is determined as the contaminated region.
(3) The filter cleaning device according to (1) or (2), wherein the energy is supplied so that the contamination level becomes 0.
(4) The filter cleaning device according to any one of (1) to (3), including: a mesh electrode group having at least one mesh electrode pair composed of a pair of mesh electrodes disposed so as to sandwich at least two of the plurality of regions inside the filter; an energization unit capable of selectively applying a voltage between facing electrode regions of the pair of mesh electrodes; a measuring unit that measures a current flowing in each of the plurality of regions of the filter or an electrical resistance of the region when the energization unit performs first energization of applying a voltage between all the electrode regions of the mesh electrode pair; and a determining unit that determines the contaminated region from the plurality of regions of the filter based on measurement results from the measuring unit, wherein the energization unit performs second energization of applying a voltage between the electrode regions corresponding to the region determined as the contaminated region by the determining unit among all the electrode regions of the mesh electrode pair.
(5) The filter cleaning device according to (4), wherein the voltage applied between the electrode regions corresponding to the contaminated region during the second energization is larger and an application time of the voltage is not shorter than those during the first energization.
(6) The filter cleaning device according to (4), wherein the voltage applied between the electrode regions corresponding to the contaminated region during the second energization is not smaller and an application time of the voltage is longer than those during the first energization.
(7) The filter cleaning device according to any one of (4) to (6), including: a branched end-face-emitting optical fiber provided in the filter so that at least an end face of a branch is disposed in each of the plurality of regions; and a light emission control unit capable of individually controlling light emission of a plurality of the end-face-emitting optical fibers, wherein the light emission control unit causes an end-face-emitting optical fiber corresponding to the contaminated region among the plurality of end-face-emitting optical fibers to emit light.
(8) The filter cleaning device according to any one of (1) to (3), including: a mesh electrode group having at least one mesh electrode pair composed of a pair of mesh electrodes disposed so as to sandwich at least two of the plurality of regions inside the filter; an energization unit capable of selectively applying a voltage between facing electrode regions of the pair of mesh electrodes; a measuring unit that measures a current flowing in each of the plurality of regions of the filter or an electrical resistance of the region when the energization unit performs first energization of applying a voltage between all the electrode regions of the mesh electrode pair; a determining unit that determines the contaminated region from the plurality of regions of the filter based on measurement results from the measuring unit; a branched end-face-emitting optical fiber provided in the filter so that at least an end face of a branch is disposed in each of the plurality of regions; and a light emission control unit capable of individually controlling light emission of a plurality of the end-face-emitting optical fibers, wherein the light emission control unit causes an end-face-emitting optical fiber corresponding to the contaminated region among the plurality of end-face-emitting optical fibers to emit light.
(9) The filter cleaning device according to any one of (1) to (3), including: an air blower that blows air into the filter; a measuring unit that measures an amount of air that has passed through at least one of the plurality of regions; and a determining unit that determines the contaminated region from the plurality of regions based on measurement results from the measuring unit.
(10) The filter cleaning device according to any one of (1) to (3), including: an imaging unit that images the plurality of regions; and a determining unit that determines whether or not each of the plurality of regions is a contaminated region based on imaging results from the imaging unit.
(11) The filter cleaning device according to any one of (1) to (10), wherein the plurality of regions are arranged one-dimensionally.
(12) The filter cleaning device according to any one of (1) to (10), wherein the plurality of regions are arranged two-dimensionally.
(13) The filter cleaning device according to any one of (1) to (10), wherein the plurality of regions are arranged three-dimensionally.
(14) A filter cleaning device that can detect a contamination level of each of a plurality of regions of a filter that captures particles or molecules, and can supply energy individually to the plurality of regions of the filter, wherein the filter cleaning device adjusts the amount of energy supplied to each of the plurality of regions based on the detected contamination level of each of the plurality of regions.
(15) A filter system including: a filter that captures particles or molecules; and a cleaning device that cleans the filter, wherein the cleaning device determines a contaminated region from a plurality of regions of the filter, and supplies energy for reducing a contamination level to some of the plurality of regions determined as the contaminated region.
(16) A filter system including: a filter that captures particles or molecules; and a cleaning device that cleans the filter, wherein the cleaning device can detect a contamination level of each of a plurality of regions of a filter that captures particles or molecules, and can supply energy individually to the plurality of regions of the filter, and the filter cleaning device adjusts the amount of energy supplied to each of the plurality of regions based on the detected contamination level of each of the plurality of regions.
(17) A filter cleaning method including: determining a contaminated region from a plurality of regions of a filter that captures particles or molecules; and supplying energy for reducing a contamination level to some of the plurality of regions determined as the contaminated region.
(18) The filter cleaning method according to (17), wherein the determining involves determining a region having a contamination level equal to or higher than a threshold value among the plurality of regions as the contaminated region.
(19) The filter cleaning method according to (17) or (18), wherein the supplying involves supplying the energy such that the contamination level becomes 0.

### [Reference Sings List]

- 10: Filter
- 20: Cleaning device (filter cleaning device)
- 30-1: Contaminated region determining unit (determining unit)
- 30-2: Energization control unit (part of energization unit)
- 40: Electrical resistance measuring unit (measuring unit)
- 200-1: First mesh electrode (mesh electrode)
- 200-2: Second mesh electrode (mesh electrode)
- 200-3: Third mesh electrode (mesh electrode)
- 600-1 to 600-4: Air blower
- 800-1: First imaging unit
- 800-2: Second imaging unit

## Claims

1. A filter cleaning device that determines a contaminated region from a plurality of regions of a filter that captures particles or molecules, and supplies energy for reducing a contamination level to some of the plurality of regions determined as the contaminated region.

2. The filter cleaning device according to claim 1, wherein a region having a contamination level equal to or higher than a threshold value among the plurality of regions is determined as the contaminated region.

3. The filter cleaning device according to claim 1, wherein the energy is supplied so that the contamination level becomes 0.

4. The filter cleaning device according to claim 1, comprising:
a mesh electrode group having at least one mesh electrode pair composed of a pair of mesh electrodes disposed so as to sandwich at least two of the plurality of regions inside the filter;
an energization unit capable of selectively applying a voltage between facing electrode regions of the pair of mesh electrodes;
a measuring unit that measures a current flowing in each of the plurality of regions of the filter or an electrical resistance of the region when the energization unit performs first energization of applying a voltage between all the electrode regions of the mesh electrode pair; and
a determining unit that determines the contaminated region from the plurality of regions of the filter based on measurement results from the measuring unit, wherein:
the energization unit performs second energization of applying a voltage between the electrode regions corresponding to the region determined as the contaminated region by the determining unit among all the electrode regions of the mesh electrode pair.

5. The filter cleaning device according to claim 4, wherein the voltage applied between the electrode regions corresponding to the contaminated region during the second energization is larger and an application time of the voltage is not shorter than those during the first energization.

6. The filter cleaning device according to claim 4, wherein the voltage applied between the electrode regions corresponding to the contaminated region during the second energization is not smaller and an application time of the voltage is longer than those during the first energization.

7. The filter cleaning device according to claim 4, comprising:
a branched end-face-emitting optical fiber provided in the filter so that at least an end face of a branch is disposed in each of the plurality of regions; and a light emission control unit capable of individually controlling light emission of a plurality of the end-face-emitting optical fibers, wherein:
the light emission control unit causes an end-face-emitting optical fiber corresponding to the contaminated region among the plurality of end-face-emitting optical fibers to emit light.

8. The filter cleaning device according to claim 1, comprising:
a mesh electrode group having at least one mesh electrode pair composed of a pair of mesh electrodes disposed so as to sandwich at least two of the plurality of regions inside the filter;
an energization unit capable of selectively applying a voltage between facing electrode regions of the pair of mesh electrodes;
a measuring unit that measures a current flowing in each of the plurality of regions of the filter or an electrical resistance of the region when the energization unit performs first energization of applying a voltage between all the electrode regions of the mesh electrode pair;
a determining unit that determines the contaminated region from the plurality of regions of the filter based on measurement results from the measuring unit;
a branched end-face-emitting optical fiber provided in the filter so that at least an end face of a branch is disposed in each of the plurality of regions; and
a light emission control unit capable of individually controlling light emission of a plurality of the end-face-emitting optical fibers, wherein:
the light emission control unit causes an end-face-emitting optical fiber corresponding to the contaminated region among the plurality of end-face-emitting optical fibers to emit light.

9. The filter cleaning device according to claim 1, comprising:
an air blower that blows air into the filter;
a measuring unit that measures an amount of air that has passed through at least one of the plurality of regions; and
a determining unit that determines the contaminated region from the plurality of regions based on measurement results from the measuring unit.

10. The filter cleaning device according to claim 1, comprising:
an imaging unit that images the plurality of regions; and
a determining unit that determines whether or not each of the plurality of regions is a contaminated region based on imaging results from the imaging unit.

11. The filter cleaning device according to claim 1, wherein the plurality of regions are arranged one-dimensionally, two-dimensionally, or three-dimensionally.

12. A filter cleaning device that can detect a contamination level of each of a plurality of regions of a filter that captures particles or molecules, and can supply energy individually to the plurality of regions of the filter, wherein:
the filter cleaning device adjusts the amount of energy supplied to each of the plurality of regions based on the detected contamination level of each of the plurality of regions.

13. A filter system comprising:
a filter that captures particles or molecules; and
a cleaning device that cleans the filter, wherein:
the cleaning device determines a contaminated region from a plurality of regions of the filter, and supplies energy for reducing a contamination level to some of the plurality of regions determined as the contaminated region.

14. A filter system comprising:
a filter that captures particles or molecules; and
a cleaning device that cleans the filter, wherein:
the cleaning device can detect a contamination level of each of a plurality of regions of a filter that captures particles or molecules, and can supply energy individually to the plurality of regions of the filter, and
the filter cleaning device adjusts the amount of energy supplied to each of the plurality of regions based on the detected contamination level of each of the plurality of regions.

15. A filter cleaning method comprising:
determining a contaminated region from a plurality of regions of a filter that captures particles or molecules; and
supplying energy for reducing a contamination level to some of the plurality of regions determined as the contaminated region.
